# EUROPEAN PATENT SPECIFICATION

(11) **EP 0 577 049 B1**
(45) Date of publication and mention of the grant of the patent: **04.02.1998**
(21) Application number: 93110295.8
(22) Date of filing: 28.06.1993
(51) Int. Cl.: G03B 17/30

(54) **Photographic film cassette, camera for use therewith and method of manufacturing the cassette**
Photographische Filmkassette, Kamera dazu und Verfahren zur Herstellung der Kassette
Cassette à film photographique et caméra ainsi qu'une méthode pour la fabrication de cette cassette

(30) Priority: 29.06.1992 JP 170951/92
(43) Date of publication of application: 05.01.1994
(73) Proprietor: Fuji Photo Film Co., Ltd., Kanagawa-ken (JP)
(72) Inventor: Takahashi, Koichi, c/o Fuji Photo Film Co., Ltd., Kanagawa (JP)
(74) Representative: Grünecker, Kinkeldey, Stockmair & Schwanhäusser Anwaltssozietät

(56) References cited:
- EP-A- 0 091 077
- EP-A- 0 431 529
- EP-A- 0 453 864
- US-A- 5 112 003

## Description

The present invention relates to a photographic film cassette of the type as disclosed in the preamble of claim 1, a method of manufacturing the cassette as disclosed in claim 17, and a camera of the type as described in the preamble of claim 19.

A photographic film cassette and a camera of these types are described in EP-A-431 529. The known photographic film cassette includes a cassette shell and a spool rotatable contained in a roll chamber within the cassette shell. The known film cassette is of the type which forces the photographic film to be exited through a passageway mouth of the cassette shell when the spool is rotated in an unwinding direction. Within the roll chamber and extending from the interior surface of the cassette shell two laterally spaced ridges are provided for pressing the outermost convolution of the film roll formed by a negative film wound on to the spool so as to prevent the film roll from loosening. Moreover, further projections are provided adjacent the passage mouth of the cassette shell forming separate claws for separating a leading end of the negative film from the roll and for guiding this leading end through the passageway mouth when the spool is rotated in its unwinding direction.

The camera also described in this publication has a guiding plate at the back door of the camera housing extending over the full width of the film. Guide rails are provided on both upper end lower edges of the optical aperture provided in the front part of the camera.

A further known photographic film cassette includes a photographic film positioned so that a leader does not protrude from the cassette shell prior to loading a camera with it. Such a cassette is loaded into a camera favorably with great ease. A simple photographic film-transporting mechanism of the camera is typically used with this type of cassette, and includes a construction which rotates a spool to unwind a photographic film strip (hereinafter called a film), thereby causing the leader to move through a passageway for the photographic film and exit from the cassette, as suggested in US-A-4,834,306 and EP-A-0 436 767. To prevent ambient light from entering the cassette shell, plush or light-trapping ribbons are conventionally attached to the inside of the passageway. It is also disclosed in US-A-4,221,479 that a movable closing structure openably and light-tightly encloses the inside of the cassette shell.

The closing structure, when loading a camera with the cassette, is opened by a camera, before the advancing mechanism incorporated in the camera rotates the spool in the unwinding direction so as to advance the leader. The closing structure is closed when the photographic film is wound back into the cassette shell after the exposure of the photographic film is completed, and protects the exposed photographic film inside from being subjected to ambient light inadvertently. Substitution of the closing structure for plush during advancement of the photographic film is favorable, because less load is applied to the leader in use of the closing structure than by plush, so as to facilitate the advancement of the leader in rotating the spool.

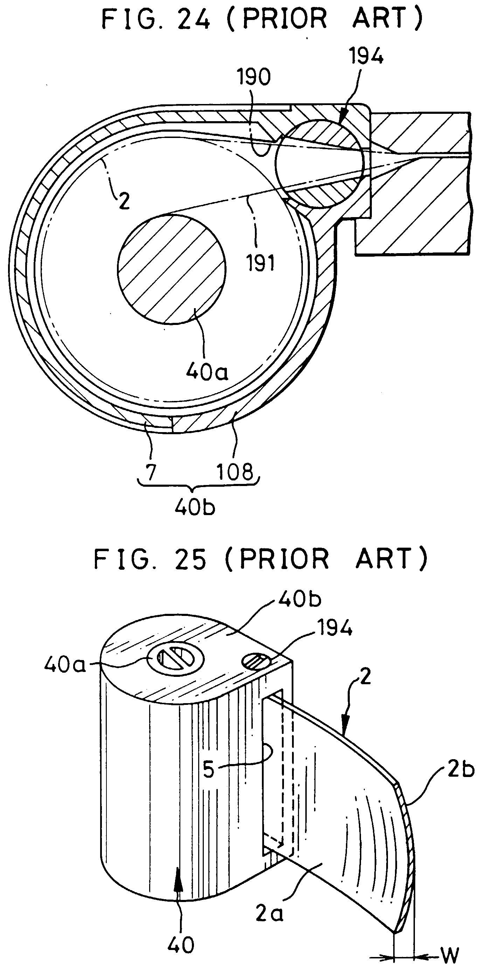

It is well known that the photographic film is constituted by applying photosensitive emulsion to one surface of a support, which is formed e.g. of cellulose triacetate (TAC). In the manufacturing process, the photographic film is dried after applying the coating of emulsion to the support. The photographic film is shrunk while dried, to degrees different between the emulsion surface and the back surface. As illustrated in Fig. 25, an emulsion surface 2a is shrunk more than a back surface 2b, so as to make a photographic film 2 curl and make convex at the back surface 2b like an archway, or eaves trough. When a spool 40a is rotated, a leader 2d of the photographic film 2 is exited through a passage mouth 5 from a cassette shell 40b, with an arch-curled amount of W.

The photographic film cassette in Fig. 25 incorporates a shutter member 194 as closing structure openable at the passage mouth 5, which lacks plush. The both surfaces 2a and 2b of the photographic film 2 come in direct contact with walls inside the passage mouth 5. The curling of the photographic film 2 like an archway causes the inside of the cassette shell 40b to rub the photographic film 2, in particular the back surface 2b, until the cassette shell 40b scratches the photographic film 2. In printing picture frames on the photographic film 2 as exposed, such scratches on the photographic film 2 would be conspicuously enlarged on photoprints as obtained, so as to lower the quality of the photoprints.

In view of the foregoing problems, an object of the present invention is to provide a photographic film cassette, a camera for use therewith, and a method of manufacturing the cassette, in which scratches unfavorable to the image quality of photographic film can be avoided.

Another object of the present invention is to provide a photographic film cassette, a camera for use therewith, and a method of manufacturing the cassette, in which a movable closing structure, openably and light-tightly enclosing the inside of the cassette shell, can be formed with great ease.

In order to achieve the above and other objects and advantages of this invention, the film cassette of claim 1, the method of claim 17, and the camera of claim 19 is provided. A passageway is formed communicatively between the passage mouth and the roll chamber of the film cassette for passing the photographic film, and is formed between opposite first and second inside faces as spaced. The first inside face faces on the emulsion surface of the photographic film. The second inside face faces on the back surface of the photographic film. A first pair of projections are formed on the first inside face for coming in contact with the emulsion surface in an outside of exposure-designated areas relative to a width of the photographic film. A second pair of projections are formed on the second inside face for coming in contact with the back surface in an outside of exposure-designated areas relative to the width of the photographic film, so as to regulate tendency of the photographic film to curl relative to the width in cooperation with the first pair of projections.

According to the present invention, scratches unfavorable to the image quality of photographic film can be avoided. Light can be shielded at the passageway, without use of plush or light-trapping ribbons.

Further, a shutter rod is arranged in the passageway for preventing ambient light from entering the roll chamber, and is rotatably supported between the first and second shell halves to be displaceable between closed and open positions in the passageway. A slot is formed through the shutter rod and has first and second opposite walls. When the shutter rod stands in the closed position, the walls block the passageway so as to shield ambient light. When the shutter rod stands in the open position, the slot is aligned with the passageway so as to allow the photographic film to pass. To produce the photographic film cassette, a first single mold is used for forming the first wall of the slot having the first pair of projections.

The shutter member thus constructed can be formed with great ease, because no movable part, called a slide core, is required in molding the shutter member to be movable in the molds, in addition to the molds respectively for the core side and the cavity side, for the purpose of forming the projections in the slot.

A camera for use with the cassette comprises a cassette chamber for containing the cassette shell. Rotating means is arranged in the cassette chamber for rotating the spool, which is rotated in the unwinding direction so as to exit the leader of the photographic film through the passage mouth. A receiving gate is formed with the cassette chamber for receiving the photographic film exited from the passage mouth with the cassette shell loaded, and has front and rear walls. A third pair of projections are formed on the front wall for coming in contact with the photographic film in an outside of exposure-designated areas relative to the width of the photographic film. A fourth pair of projections are formed on the rear wall for coming in contact with the photographic film in an outside of exposure-designated areas relative to the width of the photographic film, in positions inward from the third pair of projections relative to the width, so as to regulate tendency of the photographic film to curl relative to the width in cooperation with the third pair of projections.

To prevent the photographic film from damage in a different manner from the present invention, it would be conceived to widen the range of a passageway in the direction of the thickness of the photographic film. However, this would be impractical and unfavorable, because to would enlarge the size of the photographic film cassette, and be inconsistent with cameras which demands an exit of the photographic film from the cassette while well positioned for being received in the camera. However, the novel cassette or camera according to the present invention avoids scratches without enlarging the size of the photographic film cassette. This is also favorable in well positioning the photographic film for being received in the camera.

The above objects and advantages of the present invention will become more apparent from the following detailed description when read in connection with the accompanying drawings, in which:
Fig. 1 is an exploded perspective view illustrating a photographic film cassette according to the present invention;
Fig. 2 is a cross section illustrating the cassette in which a shutter plate is closed;
Fig. 3 is a cross section illustrating the cassette in which the shutter plate is opened;
Fig. 4 is a plan view illustrating a passage mouth with the shutter plate open;
Fig. 5 is a plan view illustrating a passage mouth with photographic film exited through it;
Fig. 6 is a partial view in cross section illustrating the cassette with the photographic film exited;
Figs. 7 and 8 are explanatory views in plan view illustrating other preferred embodiments;
Fig. 9 is an exploded perspective view illustrating a photographic film cassette having a movable shutter rod;
Fig. 10 is a perspective view illustrating the shutter rod;
Fig. 11 is a cross section illustrating the cassette in which a shutter rod is closed;
Fig. 12 is a cross section illustrating the cassette in which the shutter rod is opened;
Fig. 13 is a plan view illustrating a passage mouth with photographic film exited through it;
Fig. 14 is a perspective view illustrating another preferred shutter rod;
Fig. 15 is an explanatory view illustrating the cassette in Figs. 9 to 13, standing loaded in a suitable camera;
Fig. 16 is an explanatory view illustrating the cassette with the shutter rod in Fig. 14, standing loaded in a suitable camera;
Fig. 17 is a cross section illstrating the shutter rod in Figs. 9 to 13 while molded with a pair of molds, as viewed on Line XVII-XVII in Fig. 10;
Fig. 18 is a cross section illustrating the shutter rod in Figs. 9 to 13 while molded with the molds, as viewed on Line XVIII-XVIII in Fig. 10;
Fig. 19 is an explanatory view in exploded perspective illustrating the cavity-side mold;
Fig. 20 is an explanatory view in exploded perspective illustrating the core-side mold;
Fig. 21A and 21B are cross sections illustrating a shutter rod while molded with other preferred molds, the former taken on line across the upper ridge and the latter taken on line across the lower ridge;
Fig. 22 is a horizontal section illustrating a novel camera;
Fig. 23 is an explanatory view in cross section illustrating a rate for receiving the photographic film;
Fig. 24 is a cross section Illustrating a conventional photographic film cassette; and
Fig. 25 is an exploded perspective view illustrating the cassette.

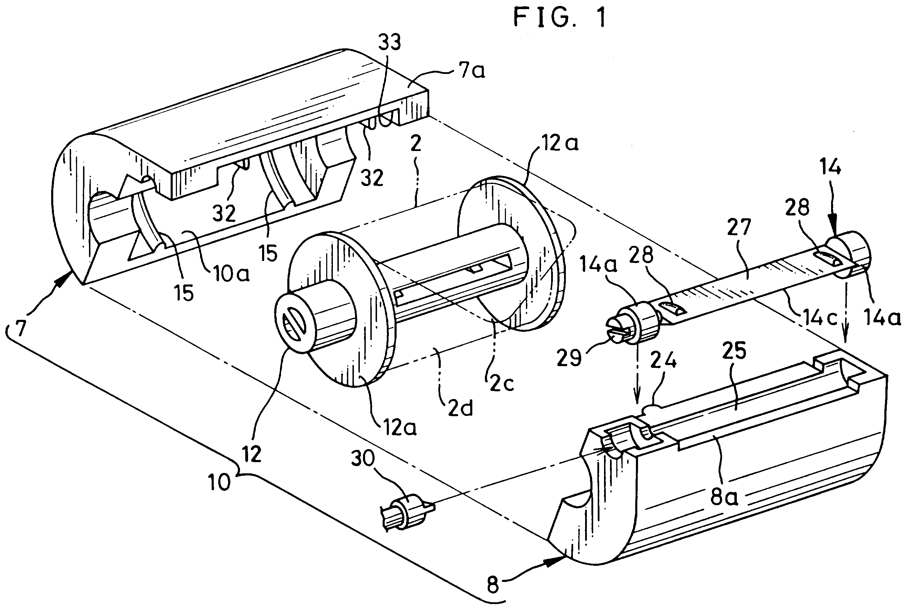

Fig. 1 illustrates a novel photographic film cassette. A cassette shell 10 consists of a pair of shell halves 7 and 8. A photographic film 2 is wound around a spool 12. The cassette shell 10 incorporates a shutter plate 14. These relevant parts are made from resin, besides the film 2.

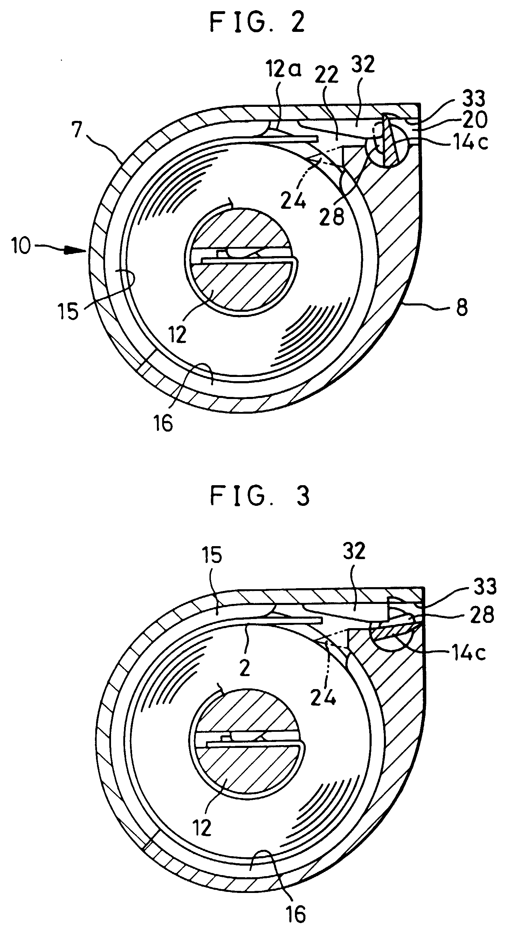

The upper shell half 7 is provided with a pair of arcuate ridges 15 in a roll chamber 10a in the cassette shell 10. The lower shell half 8 is provided with a pair of arcuate ridges 16, as illustrated in Fig. 2. While the cassette shell 10 contains the spool 12 with the photographic film 2 wound, the ridges 15 and 16 are in contact with the outermost turns of a roll 2d of the photographic film 2 so as to prevent the photographic film 2 from loosening around the spool 12. Note that the ridges 15 and 16 are in contact with the photographic film 2 in positions in the outside of picture frames, to be created on the photographic film 2, with reference to the width of the photographic film 2. Thus the photographic film 2 is protected from being rubbed and scratched even under contact with the ridges 15 and 16, to avoid reduction of the image quality of the photographic film 2.

Ports 7a and 8a are formed on the shell halves 7 and 8. A passageway 22 and a communicative mouth 20 are formed between the ports 7a and 8a. On the lower shell half 8 is formed a separator claw 24 on the innermost position of the port 8a. When the roll 2d of the photographic film 2 is rotated by rotation of the spool 12, the claw 24 separates a leader 2c of the photographic film 2 from the roll 2d. The spool 12 is provided with a pair of flanges 12a formed integrally. The photographic film 2 is wound between the flanges 12a so as to wind inward an emulsion surface 2a of the photographic film 2. A trailer of the photographic film 2 is retained or anchored on the spool 12 in a manner known to public.

The lower port 8a is provided with a semi-cylindrical recess 25 directed across passage of the photographic film 2. The shutter plate 14 is inserted in the recess 25 in a rotatable manner. The shutter plate 14 is provided with a pair of shaft portions 14a for being borne rotatably, and a plate portion 14c between the shaft portions 14a. The plate portion 14c has an inside face 27 to be directed to the inside of the cassette shell 10 when the shutter plate 14 is shut. A pair of ridges 28 are formed on the inside face 27. The ridges 28 are so inclined that, when the shutter plate 14 is open, their height increases toward the passage mouth 20 from the roll chamber 10a in order to guide smoothly said photographic film 2 exiting from said roll chamber 10a. One distal end of the shutter plate 14 has a key 29, which appears through an end face of the cassette shell 10 externally, when the shutter plate 14 is assembled. When the photographic film cassette is loaded in a camera, the key 29 is rotated by a relevant opener mechanism 30 incorporated in the camera.

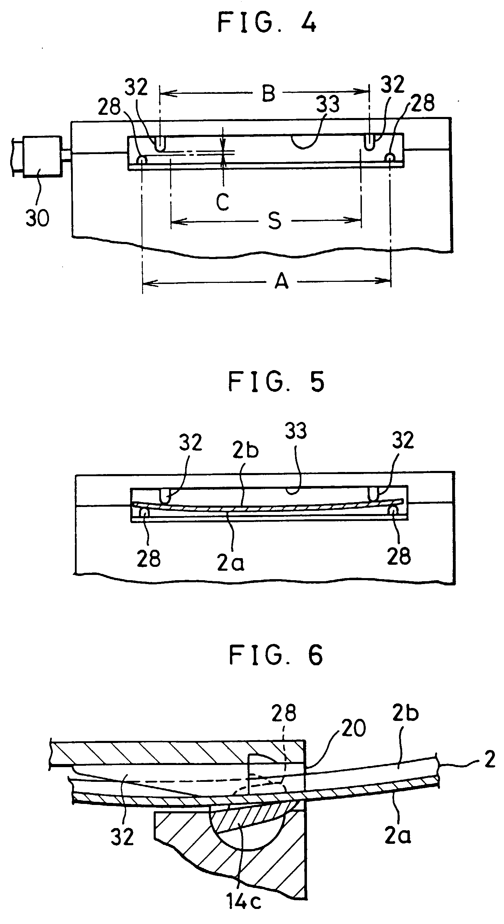

The upper port 7a has an inside face 33, on which a pair of ridges 32 are formed. The ridges 32 are so inclined that their height increases toward the passage mouth 20 from the roll chamber 10a in order to guide smoothly said photographic film 2 exiting from said roll chamber 10a. Arrangement of the ridges 28 and 32 is illustrated in Fig. 4. Interval A between the ridges 28 is greater than Interval B between the ridges 32, namely A > B. Range S of the picture frames to be recorded on the photographic film 2, with respect to the width of the photographic film 2, is smaller than Interval B. Range S is determined by an exposure aperture of the camera for use with the novel cassette.

The operation of the novel cassette will be now described. Before use, as illustrated in Fig. 2, the leader 2c of the photographic film 2 is completely contained within the cassette shell 10. The shutter plate 14 is closed, of which the plate portion 14c closes the passageway 22. Note that, in the closed position, the shutter plate 14 may be retained securely. To do this, the shutter plate 14 may be clicked with the ports 7a and/or 8a, and may be biased toward the closed position with a spring.

A camera is loaded with the cassette. Upon closing a lid of the camera covering a face of the cassette, the cassette opener 30 is engaged with the key 29 and swings it clockwise in Fig. 1. The shutter plate 14 swings to retract the plate portion 14c from the passageway 22, so as to open the passageway 22. The inside face 27 comes to be the bottom of the passageway 22 and receives the emulsion surface 2a of the photographic film 2. As illustrated in Fig. 4, the positions of erection of the ridges 28 on the face 27 are outside the ridges 32 on the face 33.

A motor in the camera for feeding the photographic film 2 is then driven, to rotate the spool 12 in the clockwise direction. The photographic film 2 is rotated together with the spool 12. The leader 2c abuts on, and is separated by, the claw 24, and is directed to the passageway 22. The photographic film 2 around the spool 12 is in contact with the ridges 15 and 16, and is prevented from loosening. The leader 2c is advanced toward the passage mouth 20 in the course of rotation of the spool 12.

While the photographic film 2 is passed through the passageway 22, the emulsion surface 2a is supported on the ridges 28. A back surface 2b of the photographic film 2 is pressed by the ridges 32. As illustrated in Figs. 5 and 6, the photographic film 2 is effectively regulated to make the emulsion surface 2a somewhat convex, namely in the direction opposite to the original characteristic of curling of the photographic film 2 being convex at the back surface 2b like an archway. The ridges 28 and 32 are in contact with the photographic film 2 outside Range S where exposure is designated for creating frames, and do not effect any influence on the image quality even when the ridges 28 and 32 scratch the surface 2a or 2b.

Therefore, the ridges 28 and 32 regulate the widthwise curling characteristic of the photographic film 2, without contact between Range S of the photographic film 2 and the cassette shell 10. Although provided with no elastic parts such as plush, the novel light-shielding structure having the shutter plate 14 will never scratch frames or exposure-designated areas. It is possible to utilize plastics for constructing the parts of the novel cassette including the shutter plate 14 and the cassette shell 10.

### EXAMPLE 1

Samples 1 to 3 of the novel cassette were produced for tests, while varying Clearance C, as illustrated in Fig. 4, defined between the lower ridges 28 and the upper ridges 32 with reference to the direction of the thickness of the photographic film 2 as passed. The photographic film 2 were advanced outward from the cassette. It was observed how much the film 2 was curled in the widthwise direction, and whether and how the surfaces 2a and 2b were scratched. The photographic film 2 in use was SHG film (trade name) manufactured by Fuji Photo Film Co., Ltd. and having speed of ISO 100. It was observed that the photographic film 2, when in a free state, had such an arch-curling characteristic that the widthwise middle of the photographic film 2 had been protruded from the lengthwise edges of the photographic film 2 at the amount of W (see Fig. 25) equaling to 5.7 mm. The photographic film 2 was positioned through the passageway 22 centrally with respect to the width of the photographic film 2, and subjected to measurement of the curling of the photographic film 2 as passed through the passageway 22.

| | Clearance C (in mm) | Arch-Curled Amount (in mm) |
|---|---|---|
| Sample 1 | 0.25 | 0.5 |
| Sample 2 | 0.15 | 0.4 |
| Sample 3 | 0.0 | 0.3 |

As can be observed from the table above, the ridges 28 and 32 certainly regulated the widthwise curling characteristic of the photographic film 2. Note that Sample 3 was compared to a Comparable Example lacking the ridges 28 and 32 but otherwise similar to Sample 3. It was observed that the number of scratches as created on the film 2 according to the Sample 3 was below one fifth as many as the number of scratches as created according to Comparable Example. The few scratches as created on the film 2 according to Sample 3 were, also, shallower than those as created according to Comparable Example.

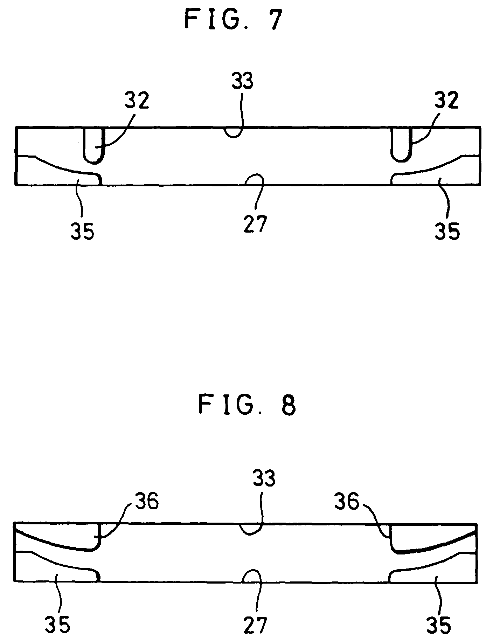

Figs. 7 and 8 illustrate other preferred embodiments, in which ridges in the passageway are varied. As observed through the passage mouth 20, the embodiment in Fig. 7 has a pair of stepped concave portions 35 formed on the lower face 27 on a shutter plate for contact with the emulsion surface 2a. In Fig. 8, the ridges 32 on the upper face 33 are replaced with a pair of stepped convex portions 36. These also regulate the widthwise curling characteristic of the photographic film 2 as exited from the cassette.

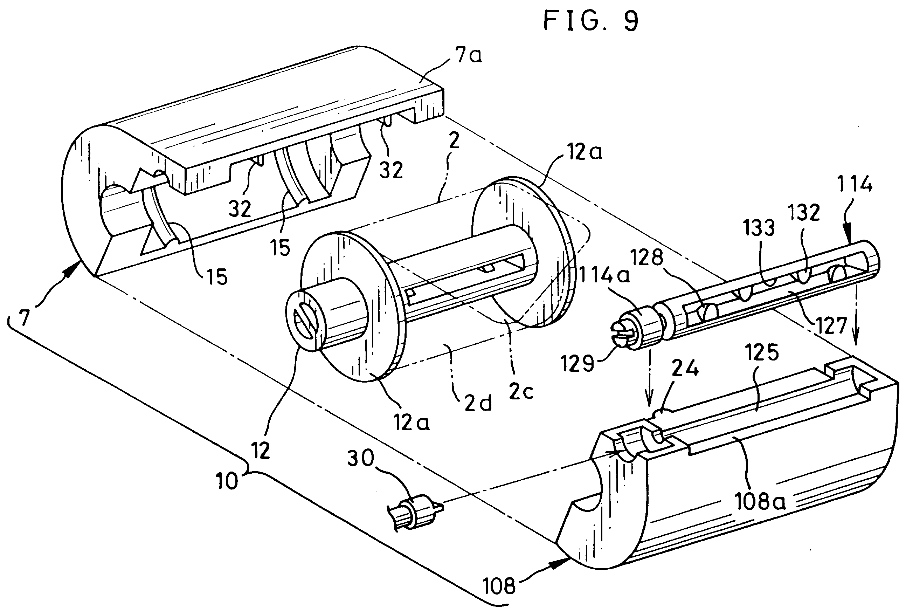

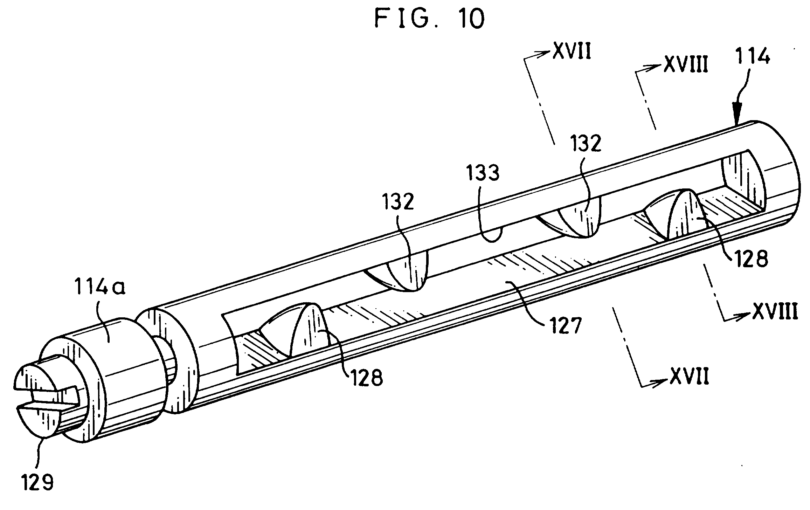

Figs. 9 and 10 illustrate a further preferred embodiment having a shutter rod 114 instead of the shutter plate. Elements similar to the above embodiments are designated with identical reference numerals. The shutter rod 114 has a slot formed in it for passing the photographic film 2 formed in it. The slot has lower and upper walls 127 and 133. Ridges 128 are formed on the lower wall 127 to receive the emulsion surface 2a. Ridges 132 are formed on the upper wall 133 to receive the back surface 2b. In Figs. 9 and 10, the slot is depicted larger than it is actually, for convenience in understanding.

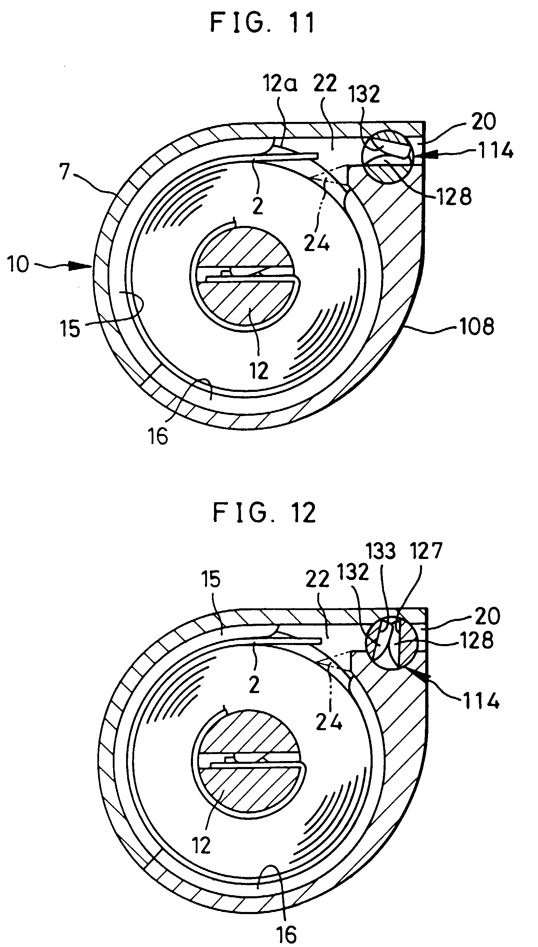

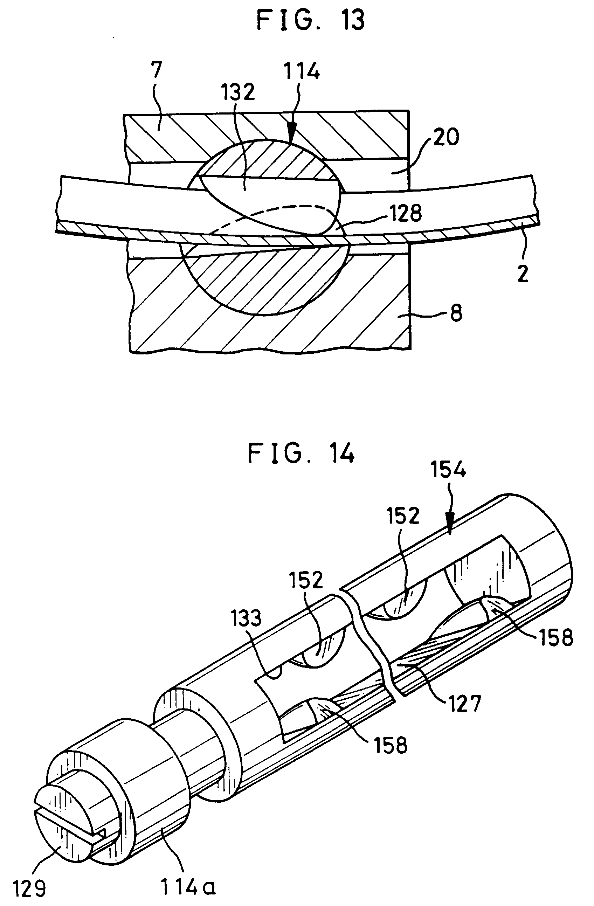

When the shutter rod 114 is open to communicate the passageway 22 with the mouth 20, the photographic film 2 is passed through the shutter rod 114, as illustrated in Fig. 11. When the shutter rod 114 is closed to block the mouth 20 from the passageway 22, the photographic film 2 is contained and protected from ambient light by the walls 127 and 133, as illustrated in Fig. 12. The shutter rod 114 is swung by an opener mechanism incorporated in a camera. When the photographic film 2 is passed through the shutter rod 114, the ridges 128 and 132, as illustrated in Fig. 13, effectively regulate the photographic film 2 to make the emulsion surface 2a somewhat convex, namely in the direction opposite to original curling of the photographic film 2 being convex at the back surface 2b to be like an archway.

A comparable example or prior art is shown in Fig. 24, in which a cassette would have a shutter rod 194 lacking the ridges 128 and 132. When the photographic film 2 would be initially advanced out of the cassette shell 40b loaded in a camera, the leader 2c of the photographic film 2 would be moved substantially along a path line 190 tangential to the outermost turn of the roll 2d and a receiving gate in the camera. When the photographic film 2 would stand in a closing phase in outward advancement with the roll 2d almost smallest, the photographic film would be moved substantially along a path line 191 tangential to the core of a spool 40a and the receiving gate in the camera.

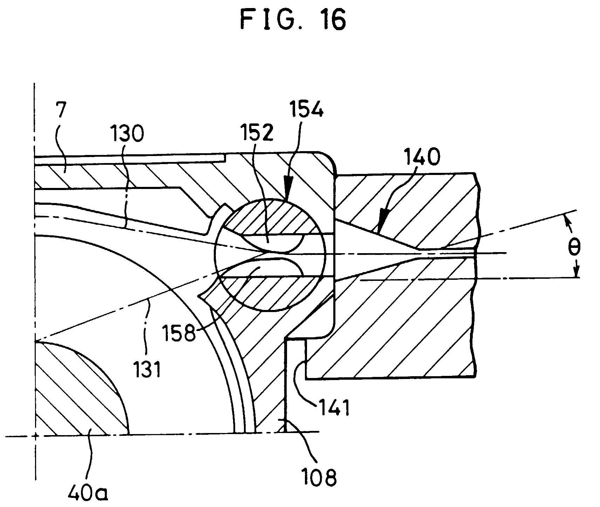

As a slot inside the shutter rod 194 would lack any ridges, the photographic film 2 would be scratched by the inside of the slot, upon passage through the shutter rod 194 without being guided on any ridges during movement. To protect the photographic film 2 from scratches, it would be necessary to cross first and second path lines on one another not outside, but inside the shutter rod 194, where the first is a path of the photographic film 2 extending from the roll 2d to the passageway when the roll 2d is largest, and the second is a path of the photographic film 2 extending from the spool 40a to the passageway when the roll 2d is smallest. In view of prevention of the photographic film 2 from contact with a shutter rod, a novel shutter rod 154 as illustrated in Figs. 14 and 16 is provided with pairs of ridges 152 and 158, unlike the shutter rod 194 in Fig. 24. Path lines 130 and 131 are intersected inside the shutter rod 154, because the path lines 130 and 131 are tangential to the ridges 152 and 158. Note that the shutter rod 154 is similar to the shutter rod 114 in Figs. 9 to 13, but different in that the opposite ridges 152 and 158 are so shaped that a clearance, defined between the upper ridges 152 and the lower ridges 158 with reference to the direction of the thickness of the photographic film 2 as passed, is over zero.

This is favorable in facility in forming relevantly a receiving gate 140 open to a cassette chamber 141 in a camera, for use with the cassette, for receiving the photographic film 2 as advanced from the cassette, because the shutter rod 154 causes the leader 2c to pass through the passage mouth 20 while regulated in the direction across the thickness of the photographic film 2. A front wall of the receiving gate 140 can be so formed that an angle θ of being open toward the cassette and to the fore is less steep, namely 30 degrees or below, in order to receive the leader 2c still under the recovering tendency to curl to the fore.

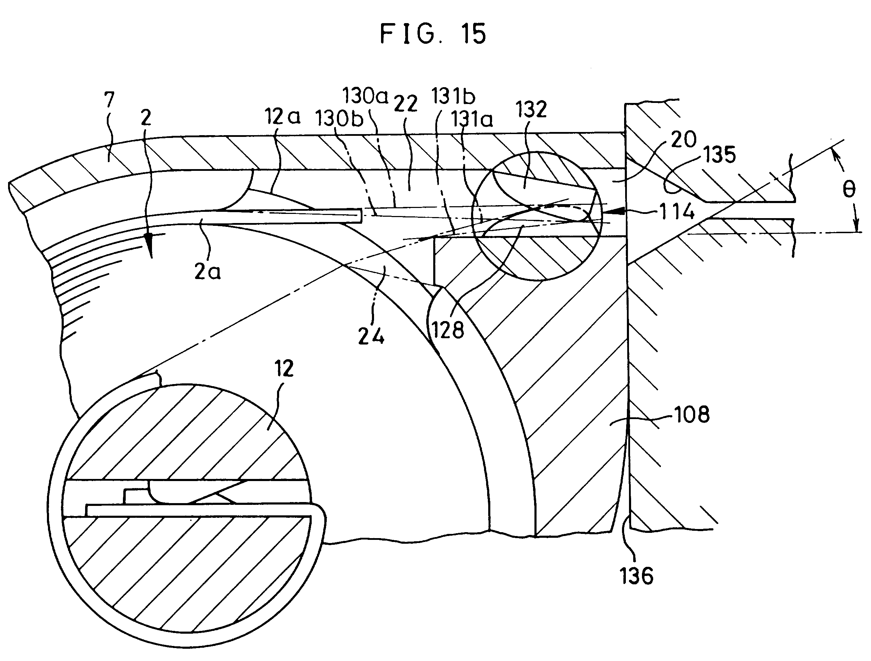

Fig. 15 illustrates the shutter rod 114 depicted in Figs. 8 to 13, providing the same operation as in Fig. 14. A path line 130a of the photographic film 2 of when the roll 2d is largest and tangential to the ridge 128 intersects within the shutter rod 114 a path line 131a of the photographic film 2 of when the roll 2d is smallest and tangential to the ridge 128. A path line 130b of the photographic film 2 of when the roll 2d is largest and tangential to the ridge 132 intersects within the shutter rod 114 a path line 131b of the photographic film 2 of when the roll 2d is smallest and tangential to the ridge 132. A relevant receiving gate 140 open to a cassette chamber 136 can be formed easily. A front wall of the receiving gate 140 can be so formed that an opening angle θ is less steep, namely 30 degrees or below.

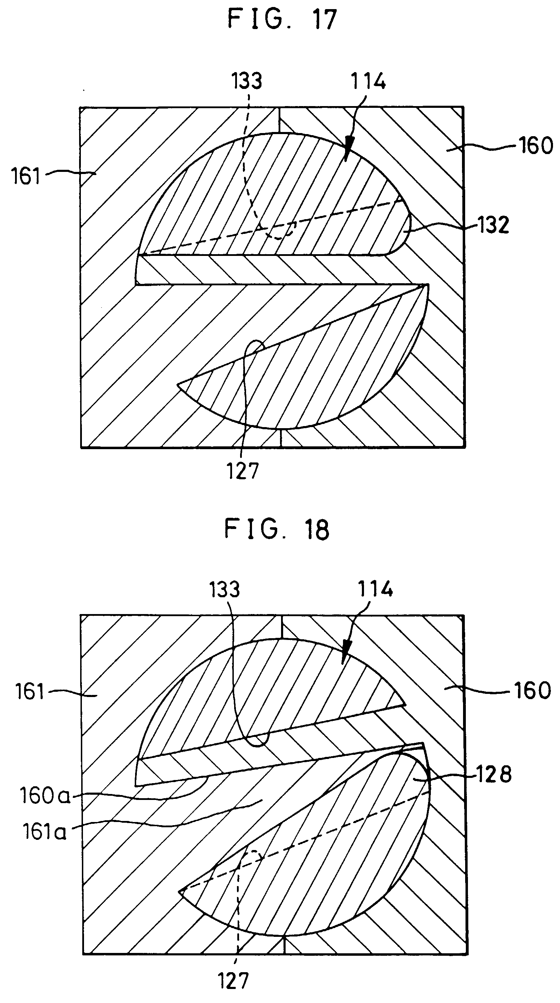

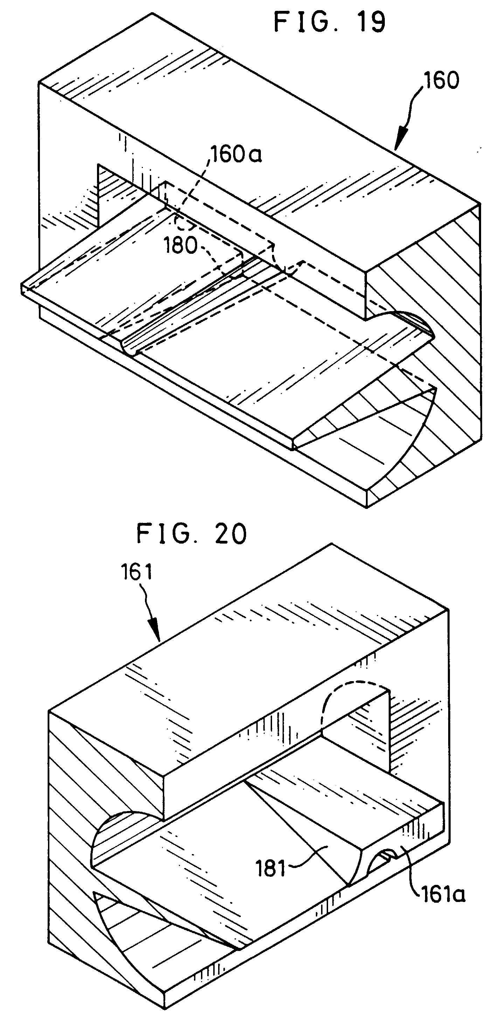

Figs. 17 to 20 illustrate a cavity-side mold 160 and a core-side mold 161, which are used for forming the shutter rod 114 with the ridges 128 and 132. Parting lines between the molds 160 and 161 are determined not at midway portions of the ridges 128 and 132, but at portions where the ridges 128 and 132 are ended at the round surface of the cylindrical core of the shutter rod 114, thus substantially avoid the path of the photographic film 2 as passed through the shutter rod 114. The photographic film 2 is protected from scratches, as prevented from contact with a burr or roughness formed by the parting lines on the shutter rod 114. In other words, the upper wall 133 having the ridges 132 is formed by use of the single mold 160, the lower wall 127 having the ridges 128 is formed by use of the single mold 161. Note that the shutter rod 114 is depicted in Fig. 17 in a cross section taken on line along the upper ridges 132, and is depicted in Fig. 18 in a cross section taken on line along the lower ridges 128.

The slot in the shutter rod 114 has a negative clearance, namely the upper ridges 132 are projected toward the lower wall 127 beyond the tops of the lower ridges 128. In other words, the lower ridges 128 and upper ridges 132 are lapped in the direction of the thickness of the photographic film 2. Despite the negative clearance, the slot with the ridges can be formed by simple use of the two molds 160 and 161. The positions of the ridges 128 and 132 are related to meet B < A in Fig. 4. The mold 160 is provided with a step 180, on which a step 181 on the mold 161 is fitted. This construction of combination of the steps 180 and 181 with a portion 161a inserted in a recess 160a is favorable to form with ease the opposite ridges 128 and 132 with the negative clearance. Even a burr or roughness is formed at the parting lines, it is positioned differently from the path or contact surface at the slot. It would be conventional to use a slide core in additional to two molds. The present invention requires no such slide core, thus needs less expense for molding.

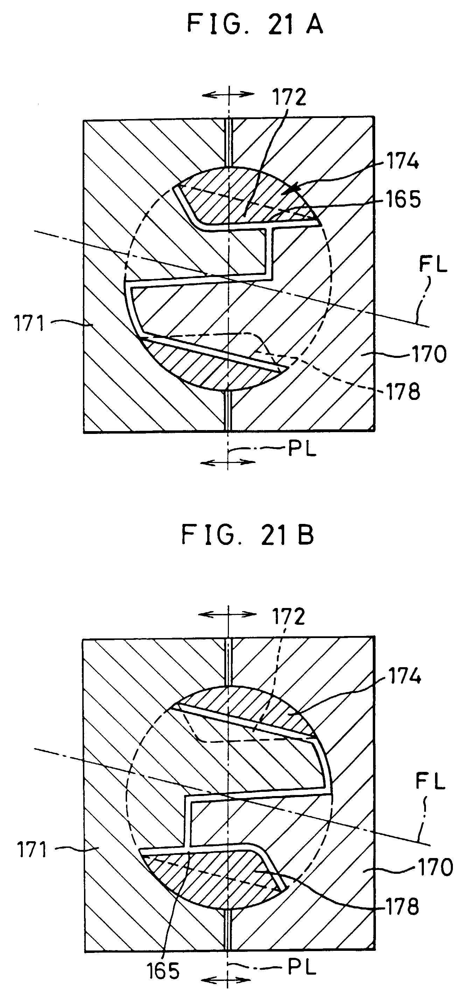

Parting lines between two molds, as illustrated in Figs. 21A and 21B, can be such that they are located near, but deviated from, the contact surface at ridges in a slot to avoid direct abutment of the photographic film 2. Molds 170 and 171, for forming a shutter rod 174, have parting lines 165 which are determined, not on tops of, but on inclinations of ridges 172 and 178, for the purpose of preventing scratches on the photographic film 2.

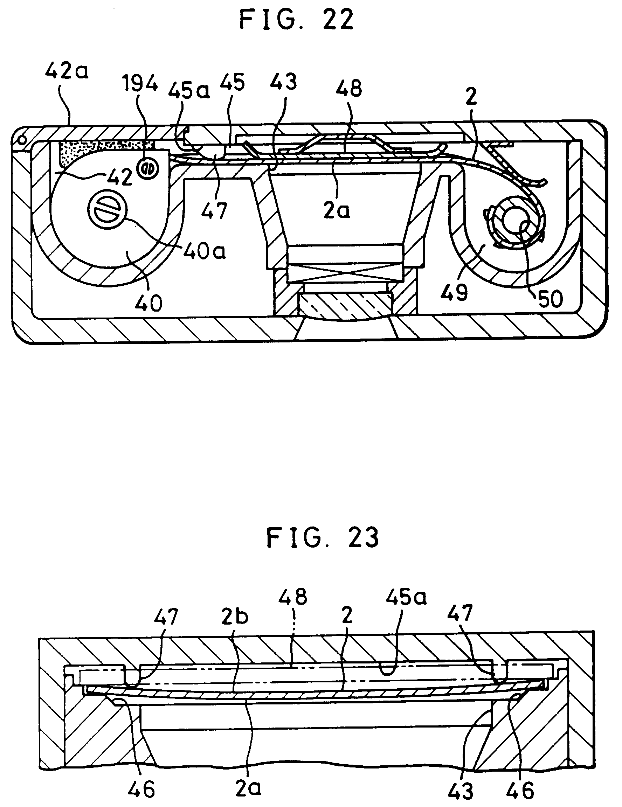

Figs. 22 and 23 illustrate a novel camera incorporating a curl-regulating structure for function similar to the above structures in the novel cassettes. Elements similar to the above embodiments are designated with identical reference numerals. A photographic film cassette 40 is of a conventional type for use with the novel camera, and is inserted into a cassette chamber 42. An exposure aperture 43 defines areas to be exposed on the photographic film 2.

Behind the exposure aperture 43 is formed a photographic film path 45, of which a receiving gate 45a is open to the cassette chamber 42. Although the cassette 40 does not have any structure for regulating the curling characteristic of the photographic film 2, the receiving gate 45a is constructed to regulate the curling characteristic of the photographic film 2: a front wall of the gate 45a facing on the emulsion surface 2a is provided with a pair of stepped portions 46 so as to support the lengthwise edge of the photographic film 2; a back wall of the gate 45a facing on the back surface 2b is provided with a pair of ridges 47 so as to press the photographic film 2 in positions inside the stepped portions 46 but outside the exposure-designated areas on the photographic film 2.

To use the camera, a back lid 42a of the cassette chamber 42 is closed. A rotatable shutter structure 194 of the cassette 40 is rotated by the opener mechanism 30 of the camera, to open a passageway of the cassette 40. The spool 40a is rotated in the direction of unwinding the photographic film 2. The leader 2c is advanced through the passage mouth 20, exited, and received into the gate 45a of the camera. Although the photographic film 2 originally has tendency of curling to make convex the back surface 2a like an archway, advancement of the photographic film 2 between the stepped portions 46 and the ridges 47 regulates the widthwise curling characteristic of the photographic film 2, in the manner in Fig. 23.

Successive rotation of the spool 40a advances the leader 2c through the path 45 in front of a pressure plate 48, and attains a take-up chamber 49 of the camera. The leader 2c is taken up on a take-up spool 50, which then drives and draws the photographic film 2 until a first exposure-designated area is positioned behind the exposure aperture 43. In position upstream from the exposure aperture 43, curling tendency of the photographic film 2 is regulated. Thus the back surface 2b of the photographic film 2 is protected from being rubbed on the back wall of the path 45 or the pressure plate 48, and from being damaged with unacceptable scratches. Although it would be conventional that the pressure plate 48 solely would keep the photographic film 2 flat on the exposure aperture 43, the curl-regulating structure of the novel camera is helpful in flattening more reliably the photographic film 2 on the exposure aperture 43.

### EXAMPLE 2

Samples 4 to 6 of the novel camera were produced for tests, while varying a clearance defined between the lower steps 46 and the upper ridges 47 with reference to the direction of the thickness of the photographic film 2 as passed, like Clearance C in Fig. 4. The photographic film 2 were passed through the receiving gate 45a. It was observed how much the film 2 was curled in the widthwise direction, and whether and how the surfaces 2a and 2b were scratched. The photographic film 2 in use was SHG film (trade name) manufactured by Fuji Photo Film Co., Ltd. and having speed of ISO 400. The photographic film 2, when in a free state, had such a curling characteristic that the widthwise middle of the photographic film 2 was protruded from the lengthwise edges of the photographic film 2 at the amount of W (see Fig. 25) equaling to 3.2 mm.

| | Clearance (in mm) | Arch-Curled Amount (in mm) |
|---|---|---|
| Sample 4 | 0.2 | 1.0 |
| Sample 5 | 0.0 | 0.4 |
| Sample 6 | -0.2 | 0.0 |

The photographic film 2 was subjected to measurement of the curling of the photographic film 2 as passed across the upstream side of the exposure aperture 43 through the path 45. A curling tendency of the photographic film 2 is regulated by the steps 46 and the upper ridges 47. Sample 6 had a negative clearance, namely the ridges 47 were projected toward the front wall beyond the tops of the steps 46, in other words, the steps 46 and ridges 47 were lapped in the direction of the thickness of the photographic film 2. Sample 6 in particular completely removed the curling tendency of the photographic film 2. Note that the a novel camera having the curl-regulating structure can be used, not only with the conventional cassette 40, but also with the novel cassettes incorporating the curl-regulating structure.

Note that the ridges 28, 32, 128, 132, 152, 158, 172 and 178, and the steps 35 and 36 can be formed, not on a shutter plate or shutter rod, but directly on the walls of the passageway 22, without use of a shutter plate or shutter rod. The ports 7a and 8a for the passageway 22 may be a separate part which can be like a single frame attachable to the cassette shell 10, and which can be provided with the opposite ridges 28, 32, 128, 132, 152, 158, and the like. In the camera, the two walls of the receiving gate 45a may be a separate part which can be like a single frame attachable to the photographic film path 45 in the camera, and which can be provided with the opposite steps 46 and 47.

As resin for constructing the novel cassette, in view of intensity and rigidity, high-impact polystyrene (HIPS), styrene/butadiene block copolymer resin (SB), acrylonitrile-butadiene-styrene resin (ABS), polycarbonate resin (PC), polypropylene resin (PP), polybutylene terephthalate (PBT), polyethylene terephthalate (PET), polyamide (PA), among others can be used.

For the pair of shell halves, HIPS, SB, and PC are preferably used among the above resins. Particularly, styrene type resin is preferable, such as HIPS and SB (e.g. ASAFLEX (trade name) manufactured by Asahi Chemical Industry Co., Ltd., CLEARENE (trade name) manufactured by Denka Co., and K-RESIN (trade name) manufacture by Philips Oil Co.). A mixture of SB and general-purpose polystyrene (GPPS) and a mixture of SB and HIPS is preferable as well. To impart the light-shielding characteristic to the shell halves, carbon black is added to the resin at 0.05 - 3.0 wt%. To improve the moldability and resistance to wear and abrasion in friction between resinous parts or between the resin and the photographic film, silicone oil is added to the rein at 0.5 - 3 wt%. It is preferable to add carbon black at 0.3 - 1.5 wt%, and silicone oil at 1.0 - 2.5 wt%.

For the shutter plate or shutter rod, HIPS, SB, high-density polyethylene resin (HDPE) and PA can be used. HDPE and PA are advantageous in high resistance to wear and abrasion in friction against the photographic film. There could be deformation of crystalline resin in use, such as HDPE and PA, which causes the cassette to exhibit unsatisfactory light shielding performance. To avoid unsatisfactory light-shielding, the molds for molding the shutter members may be prepared while taking into consideration possible deformation of resin, namely the shutter members may be preformed. SB in use may be mixed with GPPS, HIPS, or other resin compatible with SB. It is preferable to use mixture of SB with at least 30 % of GPPS, or mixture of SB with at least 30 % of HIPS. To the resin for the shutter member, it is preferable to add carbon black and silicone oil, at amounts in the ranges similar to those for the shell halves.

In consideration of disposal of waste after using the cassette, it is preferable to use the same resin of styrene type for such parts of the one cassette, as shell halves, spool core, spool flanges and shutter member. Use of the same resin is favorable in remolding and regenerating the resin by crashing and pelleting empty cassettes collectively after removal of the exposed photographic film, in view of protection of environment and economy of natural resources.

Although the present invention has been fully described by way of the preferred embodiments thereof with reference to the accompanying drawings, various changes and modifications will be apparent to those having skill in this field. Therefore, unless otherwise these changes and modifications depart from the scope of the present invention as defined in the claims, they should be construed as included therein.

## Claims

1. A photographic film cassette including a cassette shell (10) having a roll chamber (10a), a rotatable spool (12,40a) in said roll chamber, and a photographic film (2) having an emulsion surface (2a) and a back surface (2b) and being wound on said spool in the form of a roll (2d) so that the emulsion surface faces the axis of the roll, said photographic film having a leader (2c) which is exited through a passage mouth (20) of the cassette shell when said spool is rotated in an unwinding direction, said photographic film cassette further comprising:
a passageway (22) formed communicatively between said passage mouth and said roll chamber for passing said photographic film, said passageway being formed between opposite first and second inside faces (27,33;127,133) spaced with respect to each other, said first inside face facing said emulsion surface (2a) of said photographic film, and said second inside face facing said back surface (2b) of said photographic film;
a first pair of projections (28, 35, 128, 158, 178) formed on said first inside face for coming in contact with the two lateral film margins of said emulsion surface, respectively, outside of exposure-designated areas relative to a width of said photographic film; and
a second pair of projections (32, 36, 132, 152, 172) formed for coming in contact with the two lateral film margins of said back surface, respectively, outside of exposure-designated areas relative to said width of said photographic film,
**characterized in that** the top projecting portions of said first pair of projections are offset in the width direction of the film with respect to the top projecting portions of said second pair of projections so that said photographic film is bent by cooperation of said pairs of projections so as to compensate the film tendency to curl in said width direction and to held said exposure-designated area spaced from said first and second inside faces.

2. A photographic cassette as defined in claim 1, wherein said first and second pairs of projections (28, 32; 32, 35, 35; 36; 128, 132; 152, 158; 172, 178) are adapted to make said emulsion surface convex or flat relative to said width of said photographic film.

3. A photographic film cassette as defined in claim 2, wherein said first pair of projections (35) have concave faces coming in contact with said photographic film (2), and said second pair of projections (32) are shaped in bars to press said photographic film against said concave faces.

4. A photographic film cassette as defined in claim 2, wherein said first pair of projections (35) have concave faces coming in contact with said photographic film (2), and said second pair of projections (36) have convex faces the shape of which are complementary to said concave faces.

5. A photographic film cassette as defined in claim 2, wherein said second pair of projections (32, 132, 152, 172) come in contact with said photographic film (2) in positions inward from said first pair of projections (28, 128, 158, 178) relative to said width of said photographic film.

6. A photographic film cassette as defined in claims 5, wherein top faces of said first and second pairs of protections (28,32;128,132;152,158;172,178) are so inclined as to increase the height of said top faces toward said passage mouth from said roll chamber in order to guide smoothly said photographic film (2) exiting from said roll chamber (10a).

7. A photographic film cassette as defined in any one of claims 1 to 6, further comprising a separator claw (24) arranged on said first inside face (27,127) at a side of said roll chamber (10a) for separating said leader (2c) from said roll (2d) wound around said spool (12,40a).

8. A photographic film cassette as defined in any one of claims 1 to 7, wherein said first and second pairs of projections (152,158) are so arranged that C ≥ 0, where C is the clearance between said first and second opposite pairs of projections with reference to the direction of the thickness of said photographic film as passed.

9. A photographic film cassette as defined in any one of claims 1 to 8, wherein said second pair of projections (132) are projected toward said first inside face (127) beyond the tops of said first pair of projections (128).

10. A photographic film cassette as defined in any one of claims 1 to 9, wherein said passageway (22) is provided with a shutter (14,114,154,174) for preventing ambient light from entering said roll chamber (10a), said shutter being rotatable between closed and open oppositions in said passageway so that, when in said closed position, the shutter blocks said passageway so as to shield ambient light and, when in said open positions, the shutter opens said passageway so as to allow said photographic film (2) to pass.

11. A photographic film cassette as defined in claim 10, wherein first and second lines (130,131) intersect in a range where said shutter (14,114,154) is displaced to open/block said passageway (22), where said first line is the locus of said photographic film (2) extending from said roll (2d) toward said passageway when said cassette shell (10) contains substantially all of said photographic film (2) and said second line is the locus of said photographic film extending from said spool (12,40a) toward said passageway when substantially all of said photographic film is out of said cassette shell.

12. A photographic film cassette as defined in claim 10 or 11, wherein both ends of said shutter (14,114,154) are provided with shafts rotatably supported on said cassette shell (10), and at least one of said two shafts appears externally through said cassette shell to be operable.

13. A photographic film cassette as defined in any one of claims 10 to 12, wherein said shutter is a plate (14) constituting a portion of either of said first and second inside faces, and, when in said closed position, is erected, and, when in said open position, is laid so that said first inside face is opposite to said second inside face.

14. A photographic film cassette as defined in claim 13, wherein said shutter plate (14) constitutes a portion of said first inside face.

15. A photographic film cassette as defined in any one of claims 10 to 12, wherein said shutter is a rod (114,154,174) rotatably supported between first and second shell halves (7,8) of said shell (10), a slot is formed through said rod and has a pair of walls (127,133) constituting portions of said first and second inside faces, and, when said rod stands in said closed position, said walls block said passageway (22), and, when said rod stands in said open position, said slot is aligned with said passageway.

16. A camera loaded with a film cassette as defined in any one of claims 1 to 15, said camera comprising:
a cassette chamber (141) for containing said cassette shell (10); and
a receiving gate (140) formed with said cassette chamber for receiving said photographic film (2) exited from said passage mouth with said cassette shell loaded, said receiving gate having front and rear walls, and θ ≤ 30°, where θ is the angle at which said front wall is open to a fore relative to a path of said photographic film passing through said receiving gate.

17. A method of producing the photographic film cassette of claim 15, in which a single mold is used (160,161,170,171) for forming an inside face of said wall (127,133) and that pair of projections (128,158;132,152) to be formed on said wall (127,133).

18. A method as defined in claim 15, wherein said inside faces on said walls of said slot in said shutter rod (114,174) is formed by first and second single molds (160,161,170,171) defining a parting line between said molds, and said parting line is formed to avoid tops of said first and second pairs of projections of said shutter rod.

19. A camera for use with a photographic film cassette including a rotatable spool (12,40a) contained in a cassette shell (10), and photographic film (2) wound on said spool in the form of a roll (2d), said photographic film having a leader (2c) which is exited through a passage mouth (20) of said cassette shell when said spool is rotated in an unwinding direction, said camera comprising:
a cassette chamber (42) for containing said cassette shell;
means arranged in said cassette chamber for rotating said spool, the spool being rotated in said unwinding direction so as to exit said leader of said photographic film through said passage mouth;
a receiving gate (45a) formed with said cassette chamber for receiving said photographic film exited from said passage mouth when said cassette shell is loaded in the camera, said receiving gate having front and rear walls; and
a first pair of projections (46) formed on said front wall for coming in contact with lateral margins of said photographic film, respectively, outside of exposure-designated areas relative to the width direction of said photographic film;
**characterized by**
a second pair of projections (47) formed on said rear wall for coming in contact with lateral margins of said photographic film, respectively, outside of exposure-designated areas relative to said width direction of said photographic film, in positions inward from said first pair of projections relative to said width direction, so as to regulate tendency of said photographic film to curl in said width direction in cooperation with said first pair of projections.

20. A camera as defined in claim 19, wherein top faces of said second pair of projections (47) are so inclined as to increase a height of said top faces toward an inside of said receiving gate in order to guide smoothly said photographic film (2) exited from said cassette shell (10).

## Patentansprüche

1. Eine fotografische Filmkassette mit einer Kassettenschale (10), die eine Kammer (10a) für eine Rolle, eine drehbare Spule (12, 40a) in der Kammer für die Rolle und einen fotografischen Film (2) aufweist, der eine lichtempfindliche Oberfläche (2a) und eine Rückseitenfläche (2b) aufweist und auf der Spule in der Form einer Rolle (2d) derart aufgewickelt ist, daß die lichtempfindliche Oberfläche der Achse der Rolle zugewandt ist, wobei der fotografische Film einen Vorlaufteil (2c) aufweist, der durch eine Durchgangsöffnung (20) der Kassettenschale ausgeführt wird, wenn die Spule in einer Abwickelrichtung gedreht wird, wobei die fotografische Filmkassette weiter umfaßt:
einen Durchgangsweg (22), der eine Verbindung schaffend zwischen der Durchgangsöffnung und der Kammer für die Rolle ausgebildet ist zum Durchführen des fotografischen Films, wobei der Durchgangsweg zwischen gegenüberliegenden ersten und zweiten Innenflächen (27, 33; 127, 133), die zueinander im Abstand sind, gebildet ist, wobei die erste Innenfläche der lichtempfindlichen Oberfläche (2a) des fotografischen Films zugewandt ist, und wobei die zweite Innenfläche der Rückseitenfläche (2b) des fotografischen Films zugewandt ist;
ein erstes Paar von Vorsprüngen (28, 35, 128, 158, 178), die auf der ersten Innenfläche ausgebildet sind, um mit den zwei Filmseitenrändern der lichtempfindlichen Oberfläche außerhalb von für die Belichtung vorgesehenen Gebieten relativ zu einer Breite des fotografischen Films in Berührung zu treten; und
ein zweites Paar von Vorsprüngen (32, 36, 132, 152, 172), die ausgebildet sind, um mit den zwei Filmseitenrändern der Rückseitenfläche außerhalb von für die Belichtung vorgesehenen Gebieten relativ zur Breite des fotografischen Films jeweils in Berührung zu treten,
**dadurch gekennzeichnet**, daß die obersten vorspringenden Teile des ersten Paars von Vorsprüngen in der Breitenrichtung des Films bezüglich der obersten vorspringenden Teile des zweiten Paars von Vorsprüngen derart versetzt sind, daß der fotografische Film durch Zusammenwirken der Paare von Vorsprüngen gebogen wird, um die Neigung des Films zum Sich-Einrollen in der Breitenrichtung zu kompensieren und um das für die Belichtung vorgesehene Gebiet von den ersten und zweiten Innenflächen im Abstand zu halten.

2. Eine fotografische Kassette wie in Anspruch 1 bezeichnet, wobei das erste und zweite Paar von Vorsprüngen (28, 32; 32, 35, 35; 36; 128, 132; 152, 158; 172, 178) geeignet ausgebildet ist, um die lichtempfindliche Oberfläche konvex oder flach relativ zur Breite des fotografischen Films zu machen.

3. Eine fotografische Filmkassette wie in Anspruch 2 bezeichnet, wobei das erste Paar von Vorsprüngen (35) konkave Flächen aufweist, die mit dem fotografischen Film (2) in Berührung kommen, und wobei das zweite Paar von Vorsprüngen (32) die Form von Stäben aufweist, um den fotografischen Film gegen die konkaven Flächen zu drücken.

4. Eine fotografische Filmkassette wie in Anspruch 2 bezeichnet, wobei das erste Paar von Vorsprüngen (35) konkave Flächen aufweist, die mit dem fotografischen Film (2) in Berührung kommen, und wobei das zweite Paar von Vorsprüngen (36) konvexe Flächen aufweist, deren Form komplementär zu den konkaven Flächen ist.

5. Eine fotografische Filmkassette wie in Anspruch 2 bezeichnet, wobei das zweite Paar von Vorsprüngen (32, 132, 152, 172) mit dem fotografischen Film (2) an Stellen innenliegend von dem ersten Paar von Vorsprüngen (28, 128, 158, 178) relativ zur Breite des fotografischen Films in Berührung kommt.

6. Eine fotografische Filmkassette wie in Anspruch 5 bezeichnet, wobei obere Flächen der ersten und zweiten Paare von Vorsprüngen (28, 32; 128, 132; 152, 158; 172, 178) so geneigt sind, daß sich die Höhe der oberen Flächen gegen die Durchgangsöffnung aus der Kammer für die Rolle erhöht, um den fotografischen Film (2), der aus der Kammer (10a) für die Rolle austritt, strörungsfrei zu führen.

7. Eine fotografische Filmkassette wie in einem der Ansprüche 1 bis 6 bezeichnet, weiter mit einer Ablösekralle (24), die an der ersten Innenfläche (27, 127) an einer Seite der Kammer (10a) für die Rolle angeordnet ist, zum Ablösen des Vorlaufteils (2c) von der Rolle (2d), die um die Spule (12, 40a) herum aufgewickelt ist.

8. Eine fotografische Filmkassette wie in einem der Ansprüche 1 bis 7 bezeichnet, wobei die ersten und zweiten Paare von Vorsprüngen (152, 158) so angeordnet sind, daß C ≥ 0 gilt, wobei C die lichte Weite zwischen den ersten und zweiten gegenüberliegenden Paaren von Vorsprüngen in bezug auf die Richtung der Dicke des hindurchtretenden fotografischen Films ist.

9. Eine fotografische Filmkassette wie in einem der Ansprüche 1 bis 8 bezeichnet, wobei das zweite Paar von Vorsprüngen (132) gegen die erste Innenfläche (127) über die Spitzen des zweiten Paars von Vorsprüngen (128) vorsteht.

10. Eine fotografische Filmkassette wie in einem der Ansprüche 1 bis 9 bezeichnet, wobei der Durchgang (22) mit einem Verschluß (14, 114, 154, 174) versehen ist, um zu verhindern, daß Umgebungslicht in die Kammer (10a) für die Rolle eindringt, wobei der Verschluß zwischen einer Verschluß- und Öffnungsposition in dem Durchgangsweg drehbar ist, so daß in der Verschlußposition der Verschluß den Durchgangsweg blockiert, um somit Umgebungslicht abzuschirmen, und in der Öffnungsposition der Verschluß den Durchgangsweg öffnet, um somit ein Hindurchtreten des fotografischen Films (2) zu ermöglichen.

11. Eine fotografische Filmkassette wie in Anspruch 10 bezeichnet, wobei erste und zweite Linien (130, 131) sich in einem Bereich schneiden, wo der Verschluß (14, 114, 154) zum Öffnen/Verschließen des Durchgangswegs (22) verschoben wird, wobei die erste Linie die Lage des fotografischen Films (2) ist, der sich von der Rolle (2d) gegen den Durchgangsweg erstreckt, wenn die Kassettenschale (10) im wesentlichen den gesamten fotografischen Film (2) enthält, und wobei die zweite Linie die Lage des fotografischen Films ist, der sich von der Spule (12, 40a) gegen den Durchgangsweg erstreckt, wenn der fotografische Film im wesentlichen vollständig aus der Kassettenschale heraus ist.

12. Eine fotografische Filmkassette wie in Anspruch 10 oder 11 bezeichnet, wobei beide Enden des Verschlusses (14, 114, 154) mit drehbar an der Kassettenschale (10) gehalterten Wellen vorgesehen sind, und wobei wenigstens eine der beiden Wellen nach außen durch die Kassettenschale für eine Betätigung erscheint.

13. Eine fotografische Filmkassette wie in einem der Ansprüche 10 bis 12 bezeichnet, wobei der Verschluß eine Platte (14) ist, die einen Teil der ersten oder zweiten Innenfläche aufbaut, und die in der Verschlußposition aufgerichtet und in der Öffnungsposition abgelegt ist, derart, daß die erste Innenfläche der zweiten Innenfläche gegenüberliegt.

14. Eine fotografische Filmkassette wie in Anspruch 13 bezeichnet, wobei die Verschlußplatte (14) einen Teil der ersten Innenfläche darstellt.

15. Eine fotografische Filmkassette wie in einem der Ansprüche 10 bis 12 bezeichnet, wobei der Verschluß ein drehbar zwischen ersten und zweiten Schalenhälften (7, 8) der Schale (10) gehalterter Stab (114, 154, 174) ist, wobei ein Schlitz durch den Stab ausgebildet ist, der ein Paar von Wänden (127, 133) aufweist, die Teile der ersten und zweiten Innenflächen darstellen, wobei bei Anordnung des Stabs in der Verschlußposition die Wände den Durchgangsweg (22) verschließen und bei Anordnung des Stabs in der Öffnungsposition der Schlitz mit dem Durchgangsweg ausgerichtet ist.

16. Eine Kamera, in die eine wie in einem der Ansprüche 1 bis 15 bezeichnete Filmkassette eingelegt ist, wobei die Kamera umfaßt:
eine Kassettenkammer (141) zum Aufnehmen der Kassettenschale (10); und
ein Aufnahmetor (140), das in der Kassettenkammer ausgebildet ist, zum Empfangen des fotografischen Films (2), der aus der Durchgangsöffnung bei eingelegter Kassettenschale herausgeführt wird, wobei das Aufnahmetor vordere und hintere Wände aufweist, und wobei θ ≤ 30° ist, wobei θ der Winkel ist, unter dem sich eine vordere Wand nach vorne relativ zu dem Pfad des fotografischen Films, der durch das Aufnahmetor hindurchtritt, öffnet.

17. Ein Verfahren zur Herstellung der fotografischen Filmkassette nach Anspruch 15, bei dem ein einziger Fomkörper (160, 161, 170, 171) verwendet wird zur Bildung der Innenfläche der Wand (127, 133) und des Paars von Vorsprüngen (128, 158; 132, 152), die an der Wand (127, 133) auszubilden sind.

18. Ein Verfahren wie in Anspruch 17 bezeichnet, wobei die Innenfläche an den Wänden des Schlitzes in dem Verschlußstab (114, 174) durch erste und zweite Einzelformkörper (160, 161, 170, 171), die eine Trennlinie zwischen den Formkörpern bestimmen, gebildet wird, wobei die Trennlinie ausgebildet ist zur Vermeidung von Spitzen der ersten und zweiten Paare von Vorsprüngen des Verschlußstabs.

19. Eine Kamera zur Verwendung mit einer fotografischen Filmkassette, die eine in einer Kassettenschale (10) enthaltene drehbare Spule (12, 40a) und einen um die Spule in der Form einer Rolle (2d) herumgewickelten fotografischen Film (2) enthält, wobei der fotografische Film einen Vorlaufteil (2c) aufweist, der durch eine Durchgangsöffnung (20) der Kassettenschale heraustritt, wenn die Spule in einer Abwickelrichtung gedreht wird, wobei die Kamera umfaßt:
eine Kassettenkammer (42) zur Aufnahme der Kassettenschale;
in der Kassettenkammer angeordnete Mittel zum Drehen der Spule, wobei die Spule in der Abwickelrichtung gedreht wird, um somit den Vorlaufteil des fotografischen Films durch die Durchgangsöffnung herauszuführen;
ein Aufnahmetor (45a), das in der Kassettenkammer ausgebildet ist, zum Empfang des aus der Durchgangsöffnung heraustretenden fotografischen Films, wenn die Kassettenschale in die Kamera eingelegt ist, wobei das Aufnahmetor vordere und hintere Wände aufweist; und
ein erstes Paar von Vorsprüngen (46), die an der vorderen Wand ausgebildet sind, die mit Seitenrändem des fotografischen Films außerhalb von für die Belichtung vorgesehenen Gebieten relativ zur Breitenrichtung des fotografischen Films jeweils in Berührung kommen;
**gekennzeichnet durch**
ein zweites Paar von Vorsprüngen (47), die an der hinteren Wand ausgebildet sind, um mit Seitenrändern des fotografischen Films außerhalb von für die Belichtung vorgesehenen Gebieten relativ zur Breitenrichtung des fotografischen Films an Stellen innerhalb von dem ersten Paar von Vorsprüngen relativ zur Breitenrichtung jeweils in Berührung zu kommen, um somit eine Neigung des fotografischen Films zum Einrollen in der Breitenrichtung in Zusammenwirkung mit dem ersten Paar von Vorsprüngen zu regulieren.

20. Eine Kamera wie in Anspruch 19 bezeichnet, wobei obere Flächen des zweiten Paars von Vorsprüngen (47) so geneigt sind, daß sich eine Höhe der oberen Flächen gegen eine Innenseite des Aufnahmetors erhöht, um den fotografischen Film (2), der aus der Kassettenschale (10) austritt, störungsfrei zu führen.

## Revendications

1. Cassette de film photographique comprenant un boîtier de cassette (10) ayant une chambre de rouleau (10a), une bobine rotative (12, 40a) dans ladite chambre de rouleau, et un film photographique (2) ayant une surface d'émulsion (2a) et une surface arrière (2b) et enroulé sur ladite bobine sous la forme d'un rouleau (2d), de sorte que la surface d'émulsion est dirigée vers l'axe du rouleau, ledit film photographique ayant une amorce (2c) qui sort à travers une embouchure de passage (20) du boîtier de cassette lorsque ladite bobine est entraînée en rotation dans une direction de déroulement, ladite cassette de film photographique comportant en outre :
un passage (22) formé de façon communiquante entre ladite embouchure de passage et ladite chambre de rouleau afin de faire passer ledit film photographique, ledit passage étant formé entre des première et deuxième faces intérieures (27, 33; 127, 133) espacées l'une par rapport à l'autre, ladite première face intérieure étant dirigée vers ladite surface d'émulsion (2a) dudit film photographique, et ladite deuxième face intérieure étant dirigée vers ladite surface arrière (2b) dudit film photographique ;
une première paire de saillies (28, 35, 128, 158, 178) formée sur ladite première face intérieure afin de venir en contact avec les deux marges latérales de film de ladite surface d'émulsion, respectivement, à l'extérieur de zones prévues pour l'exposition par rapport à une largeur dudit film photographique ; et
une deuxième paire de saillies (32, 36, 132, 152, 172) formée afin de venir en contact avec les deux marges latérales de film de ladite surface arrière, respectivement, à l'extérieur desdites zones prévues pour l'exposition par rapport à ladite largeur dudit film photographique,
caractérisée en ce que les parties de saillie supérieures de ladite première paire de saillies sont décalées dans le sens de la largeur du film par rapport aux parties de saillie supérieures de ladite deuxième paire de saillies de sorte que ledit film photographique est courbé par coopération desdites paires de saillies de façon à compenser la tendance du film à se courber dans ledit sens de la largeur et afin de maintenir ladite zone prévue pour l'exposition espacée desdites première et deuxième faces intérieures.

2. Cassette de film photographique selon la revendication 1, dans laquelle lesdites première et deuxième parties de saillie (28, 32; 32, 35, 35; 36; 128, 132; 152, 158; 172, 178) sont prévues pour rendre ladite surface d'émulsion convexe ou plate par rapport à ladite largeur dudit film photographique.

3. Cassette de film photographique selon la revendication 2, dans laquelle ladite première paire de saillies (35) possède des faces concaves venant en contact avec ledit film photographique (2), et ladite deuxième paire de saillies (32) est en forme de barres, afin de presser ledit film photographique contre lesdites faces concaves.

4. Cassette de film photographique selon la revendication 2, dans laquelle ladite première paire de saillies (35) possède des faces concaves venant en contact avec ledit film photographique (2), et ladite deuxième paire de saillies ( 36 )possède des faces convexes dont la forme est complémentaire desdites faces concaves.

5. Cassette de film photographique selon la revendication 2, dans laquelle ladite deuxième paire de saillies (32, 132, 152, 172) vient en contact avec ledit film photographique (2) dans des positions à l'intérieur de ladite première paire de saillies (28, 128, 158, 178) par rapport à ladite largeur dudit film photographique.

6. Cassette de film photographique selon la revendication 5, dans laquelle des faces supérieures desdites première et deuxième paires de saillies (28, 32; 128, 132; 152, 158; 172, 178) sont inclinées de façon à augmenter la hauteur desdites faces supérieures vers ladite embouchure de passage depuis ladite chambre de rouleau afin de guider en douceur ledit film photographique (2) qui sort de ladite chambre de rouleau (10a).

7. Cassette de film photographique selon l'une quelconque des revendications 1 à 6, comportant en outre une griffe de séparation (24) disposée sur ladite première face intérieure (27, 127) au niveau d'un côté de ladite chambre de rouleau (10a) de façon à séparer ladite amorce (2c) dudit rouleau (2d) enroulé autour de ladite bobine (12, 40a).

8. Cassette de film photographique selon l'une quelconque des revendications là 7, dans laquelle lesdites première et deuxième paires de saillies (152, 158) sont disposées de telle sorte que C ≥ 0, où C est le jeu entre lesdites première et deuxième paires opposées de saillies en se référant au sens de l'épaisseur dudit film photographique lorsqu'il passe.

9. Cassette de film photographique selon l'une quelconque des revendications 1 à 8, dans laquelle ladite deuxième paire de saillies (132) dépasse en direction de ladite première face intérieure (127) au-delà des sommets de ladite première paire de saillies (128).

10. Cassette de film photographique selon l'une quelconque des revendications 1 à 9, dans laquelle ledit passage (22) est pourvu d'une pièce d'obturation (14, 114, 154, 174) destinée à empêcher la lumière ambiante d'entrer dans ladite chambre de rouleau (10a), ladite partie d'obturation pouvant tourner entre des positions fermée et ouverte dans ledit passage de sorte que, lorsqu'elle se trouve dans ladite position fermée, ladite partie d'obturation bloque ledit passage de façon à arrêter la lumière ambiante, et, dans ladite position ouverte, la partie d'obturation ouvre ledit passage de façon à permettre au dit film photographique (2) de passer.

11. Cassette de film photographique selon la revendication 10, dans laquelle des première et deuxième lignes (130, 131) se coupent dans une plage où ladite pièce d'obturation (14, 114, 154) est déplacée de façon à ouvrir/bloquer ledit passage (22), où ladite première ligne est le lieu dudit film photographique (2) qui s'étend depuis ledit rouleau (2d) vers ledit passage lorsque ledit boîtier de cassette (10) contient sensiblement tout ledit film photographique (2) et ladite deuxième ligne est le lieu dudit film photographique qui s'étend depuis ladite bobine (12, 40a) vers ledit passage lorsque pratiquement tout ledit film photographique est hors dudit boîtier de cassette.

12. Cassette de film photographique selon la revendication 10 ou 11, dans laquelle les deux extrémités de ladite pièce d'obturation (14, 114, 154) sont pourvues d'arbres supportés de façon rotative sur ledit boîtier de cassette (10), et au moins un desdits deux arbres apparaît à l'extérieur à travers ledit boîtier de cassette afin de pouvoir être actionné.

13. Cassette de film photographique selon l'une quelconque des revendications 10 à 12, dans laquelle ladite pièce d'obturation est une plaque (14) constituant une partie de chacune desdites première et deuxième faces intérieures et, lorsqu'elle se trouve dans ladite position fermée, est dressée, et lorsqu'elle se trouve dans ladite position, est couchée de sorte que ladite première face intérieure est à l'opposé de ladite deuxième face intérieure.

14. Cassette de film photographique selon la revendication 13, dans laquelle ladite plaque d'obturation (14) constitue une partie de ladite première face intérieure.

15. Cassette de film photographique selon l'une quelconque des revendications 10 à 12, dans laquelle ladite pièce d'obturation est une tige (114, 154, 174) supportée de façon rotative entre des première et deuxième moitiés de boîtier (7, 8) dudit boîtier (10), une fente est formée à travers ladite tige et possède une paire de parois (127, 133) constituant des parties desdites première et deuxième faces intérieures, et lorsque ladite tige se tient dans ladite position fermée, lesdites parois bloquent ledit passage (22), et lorsque ladite tige se tient dans ladite position ouverte, ladite fente est alignée avec ledit passage.

16. Appareil photographique chargé avec une cassette de film selon l'une quelconque des revendications 1 à 15, ledit appareil photographique comportant :
une chambre de cassette (141) destinée à contenir ledit boîtier de cassette (10) ; et
une entrée de réception (140) formée avec ladite chambre de cassette afin de recevoir ledit film photographique (2) qui sort de ladite embouchure de passage avec ledit boîtier de cassette chargé, ladite entrée de réception ayant des parois avant et arrière, et θ ≤ 30°, où θ est l'angle suivant lequel ladite paroi avant est ouverte vers l'avant par rapport à une trajectoire dudit film photographique qui passe à travers ladite entrée de réception.

17. Procédé de fabrication de la cassette de film photographique de la revendication 15, dans lequel un moule unique (160, 161, 170, 171) est utilisé afin de former une face intérieure de ladite paroi (127, 133) et la paire de saillies (128, 158; 132, 152) devant être formées sur ladite paroi (127, 133).

18. Procédé selon la revendication 15, dans lequel lesdites faces intérieures sur lesdites parois de ladite fente dans ladite tige d'obturation (114, 174) sont formées par des premier et deuxième moules uniques (160, 161, 170, 171) définissant une ligne de séparation entre lesdits moules, et ladite ligne de séparation est formée afin d'éviter les sommets desdites première et deuxième paires de saillies de ladite tige d'obturation.

19. Appareil photographique pour utilisation avec une cassette de film photographique comprenant une bobine rotative (12, 40a) contenue dans un boîtier de cassette (10), et un film photographique (2) enroulé sur ladite bobine sous la forme d'un rouleau (2d), ledit film photographique ayant une amorce (2c) qui sort à travers une embouchure de passage (20) dudit boîtier de cassette lorsque ladite bobine est entraînée en rotation dans une direction de déroulement, ledit appareil photographique comportant :
une chambre de cassette (42) destinée à contenir ledit boîtier de cassette ;
des moyens prévus dans ladite chambre de cassette afin d'entraîner en rotation ladite bobine, la bobine étant entraînée en rotation dans ladite direction de déroulement de façon à sortir ladite amorce dudit film photographique à travers ladite embouchure de passage ;
une entrée de réception (45a) formée avec ladite chambre de cassette afin de recevoir ledit film photographique qui sort de ladite embouchure de passage lorsque ledit boîtier de cassette est chargé dans l'appareil photographique, ladite entrée de réception ayant des parois avant et arrière ; et
une première paire de saillies (46) formées sur ladite paroi avant afin de venir en contact avec les marges latérales dudit film photographique, respectivement, à l'extérieur de zones prévues pour l'exposition par rapport au sens de la largeur dudit film photographique ;
caractérisé par
une deuxième paire de saillies (47) formées sur ladite paroi arrière afin de venir en contact avec des marges latérales dudit film photographique, respectivement, à l'extérieur de zones prévues pour l'exposition par rapport au dit sens de la largeur dudit film photographique, dans des positions à l'intérieur de ladite première paire de saillies par rapport au dit sens de la largeur, de façon à réguler la tendance dudit film photographique à se courber dans ledit sens de la largeur en coopération avec ladite première paire de saillies.

20. Appareil photographique selon la revendication 19, dans lequel des faces supérieures de ladite deuxième paire de saillies (47) sont inclinées de façon à augmenter une hauteur desdites faces supérieures vers un intérieur de ladite entrée de réception afin de guider en douceur ledit film photographique (2) qui sort dudit boîtier de cassette (10).
